# EUROPÄISCHE PATENTANMELDUNG

(11) **EP 4 525 273 A1**
(43) Veröffentlichungstag der Anmeldung: **19.03.2025**
(21) Anmeldenummer: 24198077.0
(22) Anmeldetag: 03.09.2024
(51) Int. Cl.: H02K 1/276

(54) **LAMELLENPAKET MIT KLEMMLASCHENVERBUND**

(30) Priorität: 12.09.2023 DE 102023208829
(71) Anmelder: VOLKSWAGEN AG, 38440 Wolfsburg (DE)
(72) Erfinder: Pieper, Sven, 33178 Borchen (DE); Bachmann, Tim, 34308 Bad Emstal (DE); Prokoph, Stefan, 34295 Edermünde (DE)

(57) **Zusammenfassung**

Die Erfindung betrifft ein Lamellenpaket (1), wobei das Lamellenpaket (1) eine Vielzahl an in axiale Richtung (2) des Lamellenpakets (1) aneinandergereihte Blechlamellen (3) aufweist, dabei im Lamellenpaket (1) Magnettaschen (4) ausgeführt und diese Magnettaschen (4) jeweils über in den Blechlamellen (3) ausgeformte sowie in axiale Richtung (2) des Lamellenpakets (1) miteinander fluchtende Aufnahmeöffnungen (5) ausgebildet sind. Dabei ist in jeder Magnettasche (4) zumindest ein Magnet (6) über in die Magnettaschen (4) hineinragenden Klemmlaschen (7) gefügt, wobei in zumindest einer der Magnettaschen (4) wenigstens ein Klemmlaschenverbund (8) aus wenigstens zwei Klemmlaschen (7) ausgebildet ist und diese Klemmlaschen (7) zumindest in einem Fügezustand des Lamellenpakets (1) aneinander anliegen.

## Beschreibung

Die Erfindung betrifft ein Lamellenpaket, wobei das Lamellenpaket eine Vielzahl an in axiale Richtung des Lamellenpakets aneinandergereihte Blechlamellen aufweist, dabei im Lamellenpaket Magnettaschen ausgeführt und diese Magnettaschen jeweils über in den Blechlamellen ausgeformte sowie in axiale Richtung des Lamellenpakets miteinander fluchtende Aufnahmeöffnungen ausgebildet sind. Dabei ist in jeder Magnettasche zumindest ein Magnet über in die Magnettaschen hineinragende Klemmlaschen gefügt.

Elektrische Maschinen finden beispielsweise als Synchronmotoren regemäßig Anwendung als Elektroantrieb für Kraftfahrzeuge. Bei elektrischen Maschinen werden häufig ein Rotor und/oder ein Stator mit einem Lamellenpaket ausgebildet, bei dem mehrere in Axialrichtung hintereinander angeordnete Lamellen zu einem Paket gestapelt sind. Die einzelnen Lamellen liegen dabei in Form von dünnen Blechen vor, welche in eine gewünschte, beispielsweise kreisscheibenförmige Form gestanzt oder in anderer Weise bearbeitet sind.

Um für einen Motor- oder Generatorbetrieb der elektrischen Maschine notwendige Permanentmagnete in dem Lamellenpaket anordnen zu können, werden in dem Lamellenpaket mehrere Aufnahmeräume vorgesehen. Diese Aufnahmeräume sind für gewöhnlich dadurch ausgebildet, dass in jeder Lamelle eines Lamellenpakets entsprechende Aufnahmeraumausnehmungen ausgebildet werden, indem diese zum Beispiel direkt beim Stanzprozess mit ausgestanzt werden. Die einzelnen Lamellen werden sodann derart hintereinander angeordnet, dass die Aufnahmeraumausnehmungen in den einzelnen Lamellen zueinander fluchtend ausgerichtet sind und somit die Aufnahmeräume zur Aufnahme der Permanentmagneten ausformen.

Um die Permanentmagnete in den Aufnahmeräumen zuverlässig fixieren zu können, bestehen mehrere Möglichkeiten. So ist es z. B. bekannt, die Permanentmagnete unter Verwendung eines Füll- oder Klebestoffs in den Aufnahmeräumen, entsprechend durch Kleben oder auch durch Spritzpressen, welches auch als Transfermolding offenkundig ist, zu fixieren. Dies ist durch den zusätzlich auszuführenden Prozessschritt jedoch nachteilig hinsichtlich des Prozessaufwands sowie der Herstellungskosten. Beispielsweise bedingt der zusätzliche Prozessschritt einen weiteren Aufwand bei der Handhabung der Lamellenpakete bis zum Fixierprozess, da die Permanentmagnete bis zum Fixieren durch zusätzliche Maßnahmen am Herausfallen gehindert werden müssen. Zudem werden besondere Anforderungen an die Gestalt der Lamellen gestellt, was wiederum die Auslegung der Lamellen einschränkt.

Alternativ wird in der DE 10 2011 078 054 A1 ein Lamellenpaket beschrieben, bei dem Klemmlaschen zur klemmenden Fixierung der Permanentmagnete an den Langseiten der Aufnahmeräume vorgesehen sind. Die Länge und Elastizität der in die Aufnahmeraumausnehmungen hineinragenden Klemmlaschen ist dabei derart gewählt, dass diese die Permanentmagnete in den Aufnahmeräumen klemmen können. Hierzu ist zwischen zwei axial hintereinander benachbart angeordneten Klemmlaschen jeweils ein Beabstandungsraum vorgesehen, sodass die Klemmlaschen durch Druck in Axialrichtung elastisch in die Beabstandungsräume gebogen werden. Auf diese Weise können die Permanentmagnete einfach in die Aufnahmeräume eingeschoben und dort mit Hilfe der Klemmlaschen fixiert werden.

Darüber hinaus beschreibt auch die DE 20 2009 007 544 U1 ein Lamellenpaket für den Rotor eines Elektromotors, wobei übereinandergestapelte Einzelbleche Aufnahmeräume zur Aufnahme von Permanentmagneten ausbilden. Dazu weist jedes Einzelblech eine der Anzahl der Aufnahmeräume entsprechende Anzahl von Taschenöffnungen auf, wobei an den Schmalseiten dieser Taschenöffnungen wiederum nach innen gerichtete Klemmlaschen ausgeformt sind. Innerhalb des Lamellenpakets sind die ansonsten gleichartigen, übereinandergestapelten Einzelbleche gegeneinander derart verdreht, dass innerhalb eines Aufnahmeraums vermieden ist, dass zwei Klemmlaschen unmittelbar übereinander zur Anlage gelangen.

Die vorgenannten Lösungen zeigen sich jedoch vor dem Hintergrund nachteilig, dass aufgrund der heute üblichen Effizienzanforderungen an elektrische Motoren zunehmend geringere Blechstärken für die Lamellen respektive Einzelbleche eingesetzt werden, da die geringeren Blechstärken zu einer Reduzierung der Wirbelstromverluste führen. Gleichzeitig führt eine Reduzierung der Blechstärken aber auch zu einer Reduzierung der Haltewirkung der Klemmlaschen. Da die Geometrie der Aufnahmeräume für die Permanentmagnete jedoch aus elektromagnetischen Gründen nicht beliebig angepasst werden kann, ist besonders unter schwierigen Auslegungsbedingungen zum Teil bereits während der Fertigung mit einem Verlust der Haltekraft zu rechnen.

Um diese Problemstellung zu adressieren, ist aus dem Stand der Technik der Einsatz von vorgeformten Klemmlaschen sowie der Einsatz einer erhöhten Anzahl von Klemmlaschen in jeder Magnettasche bekannt.

Im Zusammenhang mit vorgeformten Klemmlaschen beschreibt die DE 10 2017 218 408 A1 ein entsprechendes Rotorpaket einer elektrischen Maschine, wobei wiederum ein jeder in einen Aufnahmeraum des Lamellenpakets eingebrachter Permanentmagnet form- und kraftschlüssig fixiert wird, indem einzelne der übereinandergeschichteten Lamellen des Rotorpakets mit einer jeweiligen Klemmlasche ausgestattet sind. Die Klemmlaschen sind zueinander beabstandet angeordnet und liegen somit nicht unmittelbar aneinander an. Darüber hinaus weisen die Klemmlaschen einen durch eine Abbiegung gebildeten Halteabschnitt auf. Hierdurch verläuft der Halteabschnitt im Wesentlichen parallel zu einer Einsetzrichtung der Permanentmagnete, welche dabei der Längsrichtung der Aufnahmeräume entspricht. Um beim Einsetzen der Permanentmagnete eine mögliche Beschädigung des Magneten vorzubeugen, hat der dabei zum Rand der Ausnehmung beabstandete Halteabschnitt zudem eine in Richtung der Ausnehmung und somit quer zu deren Längsrichtung vorspringende Ausformung, die durch eine Prägekontur gebildet ist. Die eigentliche Haltewirkung begründet sich dabei jedoch aus der Verformung eines ungeprägten, ebenen Bereichs des Halteabschnitts, welcher zum Bewirken des Abbiegens des Halteabschnitts in diesem Bereich einen gegenüber dem geprägten Bereich des Halteabschnitts verminderten Querschnitt aufweist. Dieser Bereich wird dabei beim Einsetzen des Permanentmagneten elastisch verformt.

In nachteiliger Weise sind diese vorgeformten Klemmlaschen jedoch nur bei einer gewissen Mindestlänge der Klemmlaschen herstellbar, wobei durch das Umbiegen solcher langer Klemmlaschen allerdings eine hohe Blechlänge in die für Wirbelströme relevante Ebene, also die axiale Richtung des Lamellenpakets gebogen wird, wodurch messbar zusätzliche Wirbelstromverluste in der Maschine auftreten. Auch nimmt die Vorformung vergleichsweise viel Raum ein, welcher der Führung der Feldlinien durch das ausgelegte Blechstegdesign entgegenwirkt.

Eine Erhöhung der Anzahl der Klemmlaschen birgt darüber hinaus vergleichbare Probleme wie vorgeformte Laschen. Durch die höhere Anzahl wird wiederum eine hohe Blechlänge in die für Wirbelströme relevante Ebene gebogen, sodass messbare Zusatzverluste in der elektrischen Maschine auftreten. Zudem ist diese Maßnahme oftmals fast wirkungslos, da die eigentliche Geometrie der Klemmlaschen unverändert bleibt. Kommt es also zu einem Haltekraftverlust an einer Klemmlasche, so ist ein Haltekraftverlust an allen Klemmlaschen vollkommen unbeeinflusst von der Anzahl der Klemmlaschen wahrscheinlich.

Vor diesem Hintergrund liegt der Erfindung die Aufgabe zugrunde, ein Lamellenpaket der eingangs genannten Art derart auszuführen, dass eine hohe Haltekraft auf in dem Lamellenpaket angeordnete Magnete auch bei Nutzung von Blechlamellen geringer Blechstärke gewährleistet ist.

Diese Aufgabe wird gelöst mit einem Lamellenpaket gemäß den Merkmalen des Patentanspruchs 1. Die Unteransprüche betreffen besonders zweckmäßige Weiterbildungen der Erfindung.

Erfindungsgemäß ist also ein Lamellenpaket, insbesondere eines Rotors einer elektrischen Maschine respektive eine elektrische Maschine, insbesondere aufweisend einen Rotor mit einem solchen Lamellenpaket vorgesehen. Hierbei weist das Lamellenpaket eine Vielzahl an in axiale Richtung des Lamellenpakets aneinandergereihte Blechlamellen auf. Darüber hinaus sind im Lamellenpaket - sich in axiale Richtung durch das Lamellenpaket erstreckende - Magnettaschen ausgeführt, wobei die Magnettaschen jeweils über in den Blechlamellen ausgeformte und in axiale Richtung des Lamellenpakets miteinander fluchtende Aufnahmeöffnungen ausgebildet sind. Zudem ist in jeder Magnettasche zumindest ein Magnet über in die Magnettaschen hineinragende Klemmlaschen, insbesondere kraft- und formschlüssig gefügt, wobei die Klemmlaschen insbesondere zumindest an einer Teilmenge der Aufnahmeöffnungen ausgeformt sind. Erfindungsgemäß ist weiterhin vorgesehen, dass in zumindest einer der Magnettaschen wenigstens ein Klemmlaschenverbund aus wenigstens zwei Klemmlaschen ausgebildet ist, wobei diese Klemmlaschen zumindest in einem Fügezustand des Lamellenpakets aneinander anliegen. Aufgrund des aneinander Anliegens der Klemmlaschen im jeweiligen Klemmlaschenverbund lässt sich trotz einer geringen respektive im Vergleich zum Stand der Technik geringeren Blechstärke der Blechlamellen und somit der an den Blechlamellen ausgeformten Klemmlaschen in vorteilhafter Weise eine hohe Haltekraft für die in den Magnettaschen angeordneten Magnete, insbesondere Permanentmagnete respektive Hartmagnete, über die Klemmlaschen bereitstellen. Derart lässt sich ein Sichern der Magnete in den Magnettaschen auch ohne eine weitere Fixierung der Magnete durch Kleben oder Spritzpressen gewährleisten, da aufgrund der insbesondere gegenüber der Anordnung von einzelnen, nicht in einem Klemmlaschenverbund ausgeführten Klemmlaschen eine deutlich erhöhte Steifigkeit eines Klemmlaschenverbunds und somit die durch einen Klemmlaschenverbund bereitstellbare Haltekraft erhöht ist.

Die durch den Klemmlaschenverbund oder die Klemmlaschenverbunde bereitgestellte Haltekraft kann hierbei vorteilhaft um das Vierfache bis Zehnfache gegenüber der Ausführung von einzelnen, nicht aneinander liegenden Klemmlaschen gleicher Blechstärke erhöht sein. Dies betrifft sowohl die Ausführung einzelner Klemmlaschen mit unterschiedlichen Geometrien und/oder die Ausführung von einzelnen Klemmlaschen mit den Klemmlaschenverbunden gleichender Anzahl als auch die Ausführung von einzelnen Klemmlaschen, welche in gegenüber der Ausführung von Klemmlaschenverbunden um das Eineinhalbfache erhöhter Anzahl ausgeführt sind.

Grundsätzlich kann zudem vorgesehen sein, dass zwischen den einzelnen, in axiale Richtung miteinander fluchtenden Klemmlaschen zumindest eines respektive eines jeden Klemmlaschenverbunds, ein klemmlaschenfreier Verbundabschnitt ausgebildet ist. Dieser klemmlaschenfreie Verbundabschnitt wäre dabei im Speziellen über klemmlaschenfreie Blechlamellen oder klemmlaschenfreie Blechlamellenabschnitte ausgebildet, die zwischen den die Klemmlaschen aufweisenden Blechlamellen angeordnet sind. Der klemmlaschenfreie Verbundabschnitt sollte dabei eine oder mehrere, bevorzugt höchstens fünf, besonders bevorzugt höchstens drei klemmlaschenfreie Blechlamellen oder klemmlaschenfreie Blechlamellenabschnitte umfassen. Hierdurch wären die Klemmlaschen des Klemmlaschenverbunds respektive eines jeden Klemmlaschenverbunds in einem Vorfügezustand des Lamellenpakets, in welchem die Magnete noch nicht in den Magnettaschen gefügt sind, zueinander um den klemmlaschenfreien Verbundabschnitt beabstandet und würden folglich noch nicht aneinander anliegen sowie sich entsprechend in der Ebene der die jeweiligen Klemmlaschen aufweisenden Blechlamellen und damit senkrecht zur Fügerichtung der Magnete in den Magnettaschen und/oder der axialen Richtung des Lamellenpakets erstrecken. Im Fügezustand des Lamellenpakets liegen die Klemmlaschen des Klemmlaschenverbunds respektive eines jeden Klemmlaschenverbunds aufgrund des beim Fügen der Magnete in den Magnettaschen erfolgenden, zumindest teilweisen Umformens, insbesondere zumindest teilweisen Umbiegens der Klemmlaschen zumindest quer zur Fügerichtung aneinander an, sodass der klemmlaschenfreie Verbundabschnitt zumindest in einem Anlagebereich des Klemmlaschenverbunds respektive eines jeden Klemmlaschenverbunds an den Magneten überbrückt ist. Dabei verläuft zumindest der sich im Anlagebereich an einem Magneten befindende Abschnitt der Klemmlaschen eines Klemmlaschenverbunds in dem Fügezustand im Wesentlichen in Richtung der Fügerichtung der Magnete respektive entlang der axialen Richtung des Lamellenpakets.

Bevorzugt ist in einer besonders vorteilhaften Weiterbildung der Erfindung hingegen jedoch vorgesehen, dass die Klemmlaschen eines -jeden - Klemmlaschenverbunds an in die axiale Richtung des Lamellenpakets unmittelbar aufeinanderfolgenden Blechlamellen ausgeformt sind. Derart lässt sich die durch einen -jeweiligen - Klemmlaschenverbund bereitstellbare Haltekraft weiter erhöhen, da ebenfalls eine weiter gesteigerte Steifigkeit eines -jeweiligen - Klemmlaschenverbunds ausgebildet ist. Dabei besteht folglich auch in einem Vorfügezustand des Lammellenpakets kein klemmlaschenfreier Verbundabschnitt zwischen den Klemmlaschen eines -jeweiligen - Klemmlaschenverbunds. Die somit unmittelbar aufeinanderfolgenden Klemmlaschen des Klemmlaschenverbunds liegen folglich bereits in dem Vorfügezustand aneinander an und erstrecken sich wiederum in der Ebene der die jeweiligen Klemmlaschen aufweisenden Blechlamellen und damit senkrecht zur Fügerichtung der Magnete in den Magnettaschen und/oder der axialen Richtung des Lamellenpakets. Im Fügezustand des Lamellenpakets liegen die Klemmlaschen des Klemmlaschenverbunds respektive eines jeden Klemmlaschenverbunds und somit auch nach dem beim Fügen der Magnete in den Magnettaschen erfolgenden, zumindest teilweisen Umformen, insbesondere zumindest teilweisen Umbiegen der Klemmlaschen quer zur Fügerichtung weiterhin aneinander an, sodass folglich auch im Fügezustand kein klemmlaschenfreier Verbundabschnitt ausgebildet ist. Dabei erstreckt sich zumindest der sich im Anlagebereich an einem Magneten befindende Abschnitt der Klemmlaschen eines Klemmlaschenverbunds in dem Fügezustand in gleicher Weise im Wesentlichen in Richtung der Fügerichtung der Magnete respektive entlang der axialen Richtung des Lamellenpakets.

Von Vorteil stellt sich eine Ausführungsführungsform der Erfindung darüber hinaus dann dar, wenn eine Anzahl der, insbesondere unmittelbar aufeinanderfolgenden, aneinander anliegenden Klemmlaschen eines -jeweiligen - Klemmlaschenverbunds derart hoch - gewählt - ist, dass sich eine Gesamtblechstärke des die Klemmlaschen umfassenden Klemmlaschenverbunds um nicht mehr als eine Blechstärke einer - einzigen - Klemmlasche respektive einer - einzigen - Blechlamelle von einer- nominellen - Spaltstärke zwischen, insbesondere einer Wandung der Magnettasche und Magnet unterscheidet. Diese Spaltstärke liegt hierbei insbesondere bei einseitiger Anlage eines Magneten in der Magnettasche vor. In dieser Weise lässt sich eine erforderliche Haltekraft sowie eine - im Wesentlichen - optimale Anlage eines -jeweiligen - Klemmlaschenverbunds an dem Magneten gewährleisten und/oder eine Überdehnung der Klemmlaschen beim Fügen der Magnete in den Magnettaschen vermeiden. Bevorzugt wäre die Gesamtblechstärke dabei um nicht mehr als eine Blechstärke einer - einzigen - Klemmlasche und/oder einer - einzigen - Blechlamelle geringer, als die - nominelle - Spaltstärke.

Als vorteilhaft ist eine Weiterbildung der Erfindung auch dann anzusehen, wenn zumindest die in eine Fügerichtung der Magnete in den Magnettaschen erste Klemmlasche eines -jeweiligen - Klemmlaschenverbunds eine abweichende Geometrie zu wenigstens einer in Fügerichtung - unmittelbar - nachfolgenden Klemmlasche des Klemmlaschenverbunds aufweist. So kann vorteilhaft z. B. ein den gesamten Klemmlaschenverbund überdeckender Abschnitt der in Fügerichtung ersten Klemmlasche und damit ein optimaler Anlagebereich der Klemmlaschenverbunde an die Magnete bereitgestellt werden. Hierfür kann die in Fügerichtung erste Klemmlasche beispielsweise eine höhere Länge als die weiteren, in respektive quer zur Fügerichtung folgenden Klemmlaschen aufweisen, sodass die aufgrund des aneinander Anliegens der Klemmlaschen eines Klemmlaschenverbunds beim Umformen bedingte Verkürzung des Anlagebereichs der ersten Klemmlasche an einem Magneten ausgleichbar ist.

Darüber hinaus ist eine Ausgestaltung der Erfindung ebenso mit Vorteil behaftet, wenn sich eine -jeweilige - Geometrie von, insbesondere in eine Fügerichtung der Magnete in den Magnettaschen, sukzessive aufeinanderfolgenden Klemmlaschen eines - jeweiligen - Klemmlaschenverbunds von Klemmlasche zu Klemmlasche voneinander unterscheidet. Hierfür kann beispielsweise eine Abfolge von, die Klemmlaschen mit den unterschiedlichen Geometrien aufweisenden, Blechlamellen aufgestapelt werden. Die sich dabei sukzessive unterscheidenden Geometrien ermöglichen vorteilhaft eine Anpassung der mechanischen Eigenschaften, beispielsweise der Biegeeigenschaften wie der (Biege-)Steifigkeit, insbesondere während des Umformens und/oder nach dem Umformen der Klemmlaschenverbunde beim Fügen der Magnete in den Magnettaschen. So könnten z. B. sich während des Umformens versteifende Klemmlaschenverbunde bereitgestellt werden.

Von Vorteil ist es ferner, wenn zumindest zwei der, insbesondere unmittelbar aufeinanderfolgenden, aneinander anliegenden Klemmlaschen eines -jeweiligen - Klemmlaschenverbunds, bevorzugt im Fügezustand von Lamellenpaket und Magneten, sich lediglich teilüberlappend ausgeführt sind. Hierdurch lassen sich die einzelnen, Klemmlaschen aufweisenden Blechlamellen vorteilhaft über ein - einziges - Stanzwerkzeug erzeugen, was die Fertigungskosten im Vergleich zur Ausführung von Blechlamellen mit sich in ihrer Geometrie unterscheidenden Klemmlaschen deutlich senkt.

Die zumindest zwei, insbesondere unmittelbar aufeinanderfolgenden, aneinander anliegenden Klemmlaschen eines -jeweiligen - Klemmlaschenverbunds könnten jedoch bereits in einem Vorfügezustand des Lamellenpakets, in welchem die Magnete noch nicht in den Magnettaschen gefügt sind, lediglich teilüberlappend ausgeführt sein.

Denkbar ist es zudem, dass mehrere, insbesondere an einer - einzigen - Wandung einer jeweiligen Magnettasche in axiale Richtung des Lamellenpakets aufeinanderfolgend ausgebildete Klemmlaschenverbunde bevorzugt alternierend versetzt zueinander angeordnet sind.

In einer ebenso vorteilhaften Weiterbildung der Erfindung ist jedoch angedacht, dass in wenigstens einer der einen Klemmlaschenverbund aufweisenden Magnettaschen wenigstens eine Reihe aus mehreren Klemmlaschenverbunden ausgeführt ist, wobei die Klemmlaschenverbunde einer jeweiligen Reihe in die axiale Richtung des Lamellenpakets miteinander fluchtend angeordnet sind. Hierdurch liegt in vorteilhafter Weise stets eine definierte Anlage der Klemmlaschenverbunde an den Magneten vor.

Eine darüber hinaus mit Vorteil behaftete Ausbildung der Erfindung liegt darin begründet, dass insbesondere in einem Vorfügezustand des Lamellenpakets, in welchem die Magnete noch nicht in den Magnettaschen gefügt sind, zwischen je zwei in einer jeweiligen Reihe von Klemmlaschenverbunden ausgeführten Klemmlaschenverbunden ein Zwischenraum ausgebildet ist, in welchem an den diesen Zwischenraum umfassenden Blechlamellen keine Klemmlaschen ausgeformt sind. Derart kann der-jeweilige - Klemmlaschenverbund beim Umformen der Klemmlaschen während des Fügens der Magnete in den Magnettaschen zumindest teilweise in den Zwischenraum überführt werden und diesen zumindest zum Teil einnehmen, sodass ein Anlagebereich mit den Magneten ausgebildet wird.

Insbesondere mit der vorstehenden Ausbildung der Erfindung jedoch ebenso im Allgemeinen ist es zudem als vorteilhaft anzusehen, wenn der Zwischenraum eine derart hohe Anzahl an Blechlamellen umfasst, sodass sich die in einer jeweiligen Reihe in axiale Richtung des Lamellenpakets aufeinanderfolgenden Klemmlaschenverbunde nicht überlappen. Hierdurch lässt sich eine möglichst hohe Klemmkraft und zugleich ein unproblematisches Fügen der Magnete in den Magnettaschen gewährleisten.

Von Vorteil ist eine Gestaltungsform der Erfindung weiterhin dann, wenn wenigstens eine Klemmlasche eines -jeweiligen - Klemmlaschenverbunds eine Versteifungsausformung, beispielsweise eine die Klemmlasche versteifende Prägung aufweist. So lässt sich die durch die aneinander anliegenden Klemmlaschen eines -jeweiligen - Klemmlaschenverbunds bereitgestellte Haltekraft durch eine aufgrund der Versteifungsausformung etablierte, weiter erhöhte Steifigkeit vorteilhaft steigern. Dabei ist vorgesehen, dass ein die Versteifungsausformung aufweisender Abschnitt der Klemmlaschen ein, insbesondere aufgrund des Fügens der Magnete in den Magnettaschen, biegebeanspruchter Abschnitt der Klemmlaschen ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1a, 1: b ein Lamellenpaket 1 in einem Vorfügezustand;
- Fig. 2a: ein Lamellenpaket 1 in dessen Fügezustand;
- Fig. 2b: eine Detaildarstellung eines Klemmlaschenverbunds.

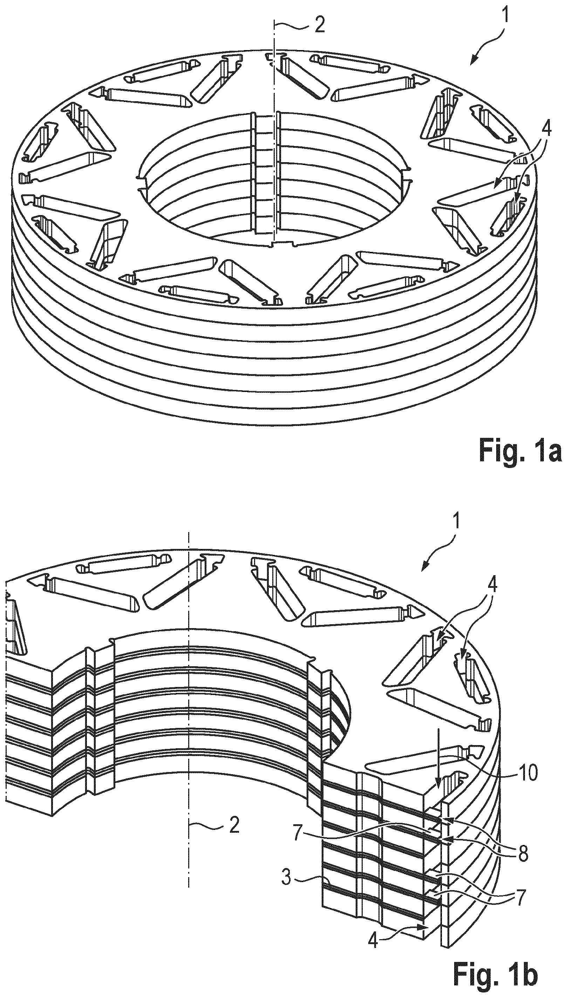

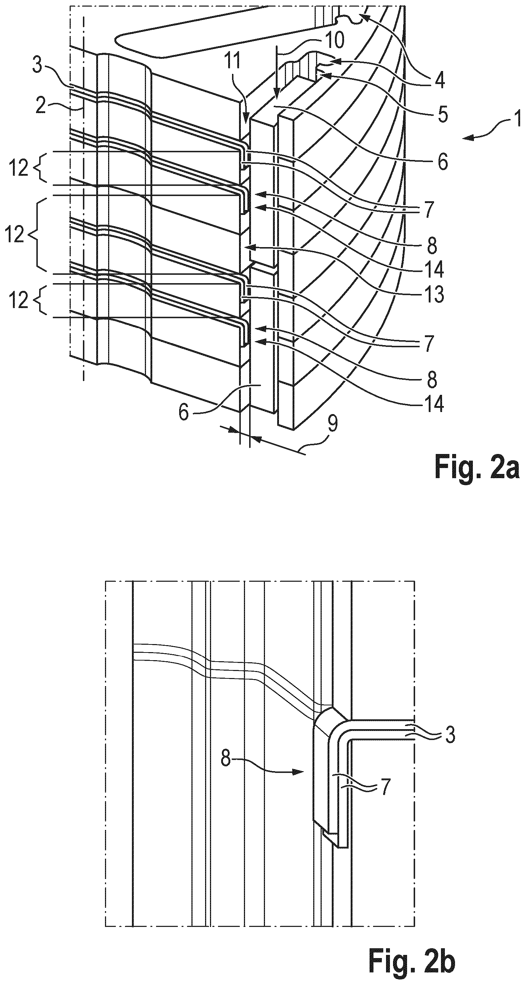

Die Figuren 1a und 1b zeigen ein Lamellenpaket 1 in einem Vorfügezustand, in welchem in den Magnettaschen 4 noch keine Magnete 6, welche in der Figur 2a dargestellt sind, angeordnet sind. Im Speziellen ist der Figur 1b eine Schnittansicht durch das in der Figur 1a dargestellte Lamellenpaket 1 zu entnehmen, wobei die an den Blechlamellen 3 ausgeformten und in die Magnettasche 4 hineinragenden Klemmlaschen 7 in dem dargestellten Vorfügezustand noch unverformt vorliegen und sich entsprechend in der Ebene der die jeweiligen Klemmlaschen 7 aufweisenden Blechlamellen 3 und damit senkrecht zur Fügerichtung 10 der Magnete 6 in den Magnettaschen 4 und/oder der axialen Richtung 2 des Lamellenpakets 1 erstrecken. Jeweils zwei Klemmlaschen 7 bilden dabei einen Klemmlaschenverbund 8, wobei die Klemmlaschen 7 in dieser, noch im Vorfügezustand vorliegenden Ausführungsform des Lamellenpakts 1 aneinander anliegen und im Speziellen an in die axiale Richtung 2 des Lamellenpakets 1 unmittelbar aufeinanderfolgenden Blechlamellen 3 ausgeformt sind.

Die Figur 2a zeigt das Lamellenpaket 1 nunmehr in dessen Fügezustand, wobei das Lamellenpaket 1 entsprechend den Figuren 1a und 1b eine Vielzahl an in die axiale Richtung 2 des Lamellenpakets 1 aneinandergereihten Blechlamellen 3 aufweist und dabei im Lamellenpaket 1 die Magnettaschen 4 ausgeführt sind. Die Magnettaschen 4 selbst sind hierbei im Speziellen jeweils über die in den Blechlamellen 3 ausgeformten sowie in axiale Richtung 2 des Lamellenpakets 1 miteinander fluchtenden Aufnahmeöffnungen 5 ausgebildet, wobei die jeweiligen Klemmlaschen 7 vom Ansatz an den Aufnahmeöffnungen 5 ausgehend in die Magnettaschen 4 hineinragen. In jeder Magnettasche 4 sind zwei Magnete 6 über die in die Magnettaschen 4 hineinragenden Klemmlaschen 7 gefügt, wobei die Klemmlaschen 7 aufgrund des Fügens in die Fügerichtung 10 umgeformt, hierbei im Besonderen umgebogen sind. Je zwei der Klemmlaschen 7 bilden dabei einen Klemmlaschenverbund 8, wobei die Klemmlaschen 7 eines jeweiligen der Klemmlaschenverbunde 8 an in die axiale Richtung 2 des Lamellenpakets 1 unmittelbar aufeinanderfolgenden Blechlamellen 3 ausgeformt sind und darüber hinaus aneinander anliegen. Bedingt durch das Umformen verläuft zumindest der sich im Anlagebereich 14 an die Magnete 6 befindende Abschnitt der Klemmlaschen 7 der Klemmlaschenverbunde 8 in dem dargestellten Fügezustand im Wesentlichen in Fügerichtung 10 der Magnete 6 respektive entlang der axialen Richtung 2 des Lamellenpakets 1. Die Anzahl der aneinander anliegenden zwei Klemmlaschen 7 des jeweiligen Klemmlaschenverbunds 8 ist dabei derart hoch, dass sich die Gesamtblechstärke des die jeweiligen zwei Klemmlaschen 7 umfassenden Klemmlaschenverbunds 8 um nicht mehr als eine Blechstärke einer der Klemmlaschen 7 von der Spaltstärke 9 zwischen der Wandung 13 der Magnettasche 4 und den Magneten 6 unterscheidet, hier im Speziellen eine Blechstärke einer Klemmlasche 7 geringer ist, als die Spaltstärke 9. Darüber hinaus sind die in der dargestellten Magnettasche 4 ausgeführten Klemmlaschenverbunde 8 in einer Reihe 11 aus mehreren Klemmlaschenverbunden 8 ausgeführt, sodass die Klemmlaschenverbunde 8 in die axiale Richtung 2 des Lamellenpakets 1 miteinander fluchtend angeordnet sind. Dabei ist zwischen je zwei der in der Reihe 11 ausgeführten und aufeinanderfolgenden Klemmlaschenverbunde 8 der Zwischenraum 12 ausgebildet, in welchem an den diesen Zwischenraum 12 umfassenden Blechlamellen 3 keine Klemmlaschen 7 ausgeformt sind. Derart kann der jeweilige Klemmlaschenverbund 8 beim Umformen der Klemmlaschen 7 während des Fügens der Magnete 6 in den Magnettaschen 4 zumindest teilweise in den Zwischenraum 12 überführt werden und diesen zumindest zum Teil einnehmen, sodass der Anlagebereich 14 mit den Magneten 6 ausgebildet wird. Der Zwischenraum 12 umfasst dabei eine derart hohe Anzahl an Blechlamellen 3, sodass sich die in der jeweiligen Reihe 11 in axiale Richtung 2 des Lamellenpakets 1 aufeinanderfolgenden Klemmlaschenverbunde 8 nicht überlappen.

Ferner ist der Figur 2a sowie der eine Detaildarstellung eines Klemmlaschenverbunds 8 aufzeigenden Figur 2b zu entnehmen, dass die zwei an den Blechlamellen 3 ausgeformten und aneinander anliegenden Klemmlaschen 7 des Klemmlaschenverbunds 8 sich lediglich teilüberlappend ausgeführt sind.

### Bezugszeichenliste

- 1: Lamellenpaket
- 2: axiale Richtung
- 3: Blechlamelle
- 4: Magnettaschen
- 5: Aufnahmeöffnung

- 6: Magnet
- 7: Klemmlasche
- 8: Klemmlaschenverbund
- 9: Spaltstärke
- 10: Fügerichtung

- 11: Reihe
- 12: Zwischenraum
- 13: Wandung
- 14: Anlagebereich

## Patentansprüche

1. Lamellenpaket (1), wobei das Lamellenpaket (1) eine Vielzahl an in axiale Richtung (2) des Lamellenpakets (1) aneinandergereihten Blechlamellen (3) aufweist, dabei im Lamellenpaket (1) Magnettaschen (4) ausgeführt und diese Magnettaschen (4) jeweils über in den Blechlamellen (3) ausgeformte sowie in axiale Richtung (2) des Lamellenpakets (1) miteinander fluchtende Aufnahmeöffnungen (5) ausgebildet sind, wobei in jeder Magnettasche (4) zumindest ein Magnet (6) über in die Magnettaschen (4) hineinragende Klemmlaschen (7) gefügt ist, **dadurch gekennzeichnet, dass** in zumindest einer der Magnettaschen (4) wenigstens ein Klemmlaschenverbund (8) aus wenigstens zwei Klemmlaschen (7) ausgebildet ist, wobei diese Klemmlaschen (7) zumindest in einem Fügezustand des Lamellenpakets (1) aneinander anliegen.

2. Lamellenpaket (1) nach Anspruch 1, **dadurch gekennzeichnet, dass** die Klemmlaschen (7) eines Klemmlaschenverbunds (8) an in die axiale Richtung (2) des Lamellenpakets (1) unmittelbar aufeinanderfolgenden Blechlamellen (3) ausgeformt sind.

3. Lamellenpaket (1) nach Anspruch 1 oder 2, **dadurch gekennzeichnet, dass** eine Anzahl der aneinander anliegenden Klemmlaschen (7) eines Klemmlaschenverbunds (8) derart hoch ist, dass sich eine Gesamtblechstärke des die Klemmlaschen (7) umfassenden Klemmlaschenverbunds (8) um nicht mehr als eine Blechstärke einer Klemmlasche (7) von einer Spaltstärke (9) zwischen Magnettasche (4) und Magnet (6) unterscheidet.

4. Lamellenpaket (1) nach zumindest einem der vorangehenden Ansprüche, **dadurch gekennzeichnet, dass** zumindest die in eine Fügerichtung (10) der Magnete (6) in den Magnettaschen (4) erste Klemmlasche (7) eines Klemmlaschenverbunds (8) eine abweichende Geometrie zu wenigstens einer in Fügerichtung (10) nachfolgenden Klemmlasche (7) des Klemmlaschenverbunds (8) aufweist.

5. Lamellenpaket (1) nach zumindest einem der vorangehenden Ansprüche, **dadurch gekennzeichnet, dass** sich eine Geometrie von sukzessive aufeinanderfolgenden Klemmlaschen (7) eines Klemmlaschenverbunds (8) von Klemmlasche (7) zu Klemmlasche (7) voneinander unterscheidet.

6. Lamellenpaket (1) nach zumindest einem der vorangehenden Ansprüche, **dadurch gekennzeichnet, dass** zumindest zwei der aneinander anliegenden Klemmlaschen (7) eines Klemmlaschenverbunds (8) sich lediglich teilüberlappend ausgeführt sind.

7. Lamellenpaket (1) nach zumindest einem der vorangehenden Ansprüche, **dadurch gekennzeichnet, dass** in wenigstens einer der einen Klemmlaschenverbund (8) aufweisenden Magnettaschen (4) wenigstens eine Reihe (11) aus mehreren Klemmlaschenverbunden (8) ausgeführt ist, wobei die Klemmlaschenverbunde (8) einer jeweiligen Reihe (11) in die axiale Richtung (2) des Lamellenpakets (1) miteinander fluchtend angeordnet sind.

8. Lamellenpaket (1) nach zumindest einem der vorangehenden Ansprüche, **dadurch gekennzeichnet, dass** zwischen je zwei in einer jeweiligen Reihe (11) von Klemmlaschenverbunden (8) ausgeführten, aufeinanderfolgenden Klemmlaschenverbunden (8) ein Zwischenraum (12) ausgebildet ist, in welchem an den diesen Zwischenraum (12) umfassenden Blechlamellen (3) keine Klemmlaschen (7) ausgeformt sind.

9. Lamellenpaket (1) nach zumindest einem der vorangehenden Ansprüche, **dadurch gekennzeichnet, dass** der Zwischenraum (12) eine derart hohe Anzahl an Blechlamellen (3) umfasst, sodass sich die in einer jeweiligen Reihe (11) in axiale Richtung (2) des Lamellenpakets (1) aufeinanderfolgenden Klemmlaschenverbunde (8) nicht überlappen.

10. Lamellenpaket (1) nach zumindest einem der vorangehenden Ansprüche, **dadurch gekennzeichnet, dass** wenigstens eine Klemmlasche (7) eines Klemmlaschenverbunds (8) eine Versteifungsausformung aufweist.
